# EUROPÄISCHE PATENTSCHRIFT

(11) **EP 3 528 978 B1**
(45) Veröffentlichungstag und Bekanntmachung des Hinweises auf die Patenterteilung: **27.05.2020**
(21) Anmeldenummer: 18700720.8
(22) Anmeldetag: 09.01.2018
(51) Int. Cl.: B21H 7/00, B21D 53/88, F16F 1/18, B60G 11/02

(54) **VERFAHREN ZUM HERSTELLEN EINER BLATTFEDER SOWIE BLATTFEDER**
METHOD FOR PRODUCING A LEAF SPRING, AND LEAF SPRING
PROCÉDÉ DE FABRICATION D'UN RESSORT À LAMES AINSI QUE RESSORT À LAMES

(30) Priorität: 13.01.2017 DE 102017100575
(43) Veröffentlichungstag der Anmeldung: 28.08.2019
(73) Patentinhaber: Sogefi HD Suspensions Germany GmbH, 58135 Hagen (DE)
(72) Erfinder: KRALER, Christian, 58339 Breckerfeld (DE); KÖHLER, Frank, 58135 Hagen (DE); GROENING, Ralf, 58762 Altena (DE)
(74) Vertreter: Haverkamp, Jens
(86) Internationale Anmeldenummer: PCT/EP2018/050430
(87) Internationale Veröffentlichungsnummer: WO 2018/130509

(56) Entgegenhaltungen:
- EP-A2- 2 283 946
- DE-A1- 10 356 312
- DE-B- 1 281 468
- JP-A- S62 227 541

## Beschreibung

Die Erfindung betrifft ein Verfahren zum Herstellen einer Blattfeder, insbesondere einer Blattfeder, deren zumindest einer Federarm eine nicht konstante Querschnittsfläche über seine Länge aufweist, wie etwa eine Parabelfeder, für eine Fahrzeugachsaufhängung, bei dem aus einem stabförmigen Vormaterial der zumindest eine an einen Einspannabschnitt grenzende Federarm durch einen Walzprozess geformt wird, wobei vor dem Prozess des Auswalzens des Vormaterialstabes zum Formen der Blattfeder von dem Vormaterialstab mechanisch eine Randschicht entfernt wird und wobei das Auswalzen des zumindest einen Federarmes in Richtung von dem Einspannabschnitt zu seinem anderen Ende hin derart durchgeführt wird, damit die Querschnittsfläche in wenigstens einem Abschnitt des Federarmes reduziert wird. Die Erfindung betrifft des Weiteren eine Blattfeder, insbesondere eine Blattfeder, deren zumindest einer Federarm eine nicht konstante Querschnittsfläche über seine Länge aufweist, wie etwa eine Parabelfeder, für eine Fahrzeugachsaufhängung mit einem durch eine erste und eine zweite Anlagefläche gebildeten Einspannabschnitt und mit zumindest einem daran angeformten und durch einen Walzprozess geformten Federarm, wobei der zumindest eine Federarm zum Ausbilden einer Parabelfeder ausgewalzt ist.

Blattfedern werden beispielsweise bei Fahrzeugachsaufhängungen zur Abfederung von auf die Fahrzeugachse wirkenden Stößen eingesetzt. Eingesetzt werden einzelne Federblätter oder Blattfederpakete, die aus mehreren zusammengehaltenen einzelnen Federblätter zusammengesetzt sind. Bei solchen zusammengesetzten Blattfederpaketen werden typischerweise Federblätter mit einer über ihrer Länge gleichbleibenden Querschnittsfläche eingesetzt. Zur Reduzierung des Gewichtes derartiger Blattfederpakete sind Parabelfedern entwickelt worden. Bei diesen Federn handelt es sich um Blattfedern, die in ihren an den Einspannabschnitt angeformten Federarmen parabelförmig ausgewalzt sind, und zwar dergestalt, dass die Parabelfeder in ihren Federarmen eine konstante Spannungsverteilung besitzt. Die Querschnittsfläche in den Federarmen ist bei derartigen Federn nicht konstant. Dies bedeutet, dass sich die Querschnittsfläche, typischerweise die Dicke der Parabelfeder in ihren Federarmen entsprechend einer Parabel ändert, und zwar ausgehend von dem Einspannabschnitt in Richtung zu dem Ende des Federarmes hin entsprechend abnimmt. Der Einspannabschnitt dient zum Anschließen der Blattfeder an die Fahrzeugachse, typischerweise unter Verwendung von Bridenplatten, die mittels Bridenschrauben unter Zwischenschaltung des Einspannabschnittes an einer Sattelplatte der Achse befestigt sind. Je nach Ausgestaltung der Fahrzeugachsaufhängung kann eine solche Blattfeder ein Federarm oder zwei einander bezüglich des Einspannabschnittes gegenüberliegende Federarme aufweisen. An deren Enden sind, wenn die Blattfeder auch Führungsaufgaben übernehmen soll, Befestigungsmittel angeordnet, mit denen die Blattfeder chassisseitig angelenkt ist. Bei dem Befestigungsmittel kann es sich beispielsweise um angerollte Augen handeln. Im Bereich des Einspannabschnittes ist auch bei einer Parabelfeder die Blattdicke konstant. Der Einspannabschnitt zeichnet sich durch zwei parallel zueinander angeordnete Anlageflächen aus. Dieses ist für den achsseitigen Anschluss oder auch für das Bilden eines Federpaketes erforderlich.

Hergestellt werden Parabelfedern aus warmgewalzten Flachstäben aus Federstahl, typischerweise gemäß der Norm EN 10089. Eingesetzt werden warmgewalzte Flachstäbe mit einer rechteckförmigen Querschnittsgeometrie, wie diese in der Norm EN 10092-1 beschrieben sind. Die in dieser Norm beschriebenen Flachstäbe als Vormaterialstäbe zum Herstellen von Blattfedern können halbkreisförmige, halbgerundete oder auch gerade Schmalseiten aufweisen. Im letzteren Fall zeichnet sich der Vormaterialstab durch gerundete Kanten aus. Sämtliche Formen sind unter den im Rahmen dieser Ausführung benutzten Begriff "rechteckförmig" zu subsummieren. Dieses schließt auch hiervon abweichende Formen ein, solange die Grundfläche rechteckförmig ist bzw. solange diese eine flache Oberseite und eine parallel dazu verlaufende flache Unterseite aufweisen. Derartige warmgewalzte Flachstäbe aus Federstahl werden in unterschiedlichen Dicken und Breiten angeboten.

Zum Herstellen einer Parabelfeder wird ein Vormaterialstab eingesetzt, dessen Dicke der Dicke der Parabelfeder in ihrem Einspannabschnitt entspricht. Bei der Herstellung einer Parabelfeder dient der bei der fertigen Blattfeder als Einspannabschnitt vorgesehene Abschnitt mit seinen Anlageflächen, bereitgestellt durch die Oberseite und die Unterseite des Vormaterialstabes, bereits als Einspannabschnitt. Zum Auswalzen der Federarme wird der Vormaterialstab in dem vorgesehenen Einspannabschnitt in ein Werkzeug eingespannt, damit die daran angrenzenden Vormaterialabschnitte, aus denen die Federarme ausgewalzt werden sollen, relativ zu dem oder den Walzgerüsten bewegbar sind. Eine Umformung im Einspannbereich ist nicht erforderlich, da der Vormaterialstab in der hierfür vorgesehenen Dicke ausgesucht worden ist. Beschrieben ist ein solches Verfahren zum Herstellen einer Parabelfeder in DE 10 2009 036 512 B3, sowie in DE 1 427 382 A1.

DE 103 56 312 A1 beschreibt eine Vorrichtung und ein Verfahren, um möglichst schnell eine Blattfeder zu walzen, ohne diese Zwischenglühen zu müssen. Dieses wird durch eine Vorrichtung erreicht, die einen Umgreifer umfasst, wodurch der Blattfederrohling automatisch gegriffen und gewendet werden kann. Mit einer Spanneinrichtung wird der Blattfederrohling im Bereich seiner Mitte oder etwas außerhalb der Mitte ergriffen.

In JP 62-227541 A ist ein Verfahren zum Walzen von Produkten beschrieben, insbesondere von Produkten mit einer nur sehr geringen Materialstärke ausgehend von einem Kupferdraht mit einem Durchmesser von 0,12 - 0,7 mm. Dieser Stand der Technik offenbart kein Verfahren zum Herstellen einer Blattfeder für eine Fahrzeugachsaufhängung.

DE 12 81 468 C, welche die Basis für den Oberbegriff der Ansprüche 1 und 11 bildet, offenbart eine Blattfeder einer Fahrzeugachsaufhängung mit einem durch eine erste und eine zweite Anlagefläche gebildeten Einspannabschnitt und mit zumindest einem daran angeformten und durch einen Walzprozess geformten Federarm. Der zumindest eine Federarm ist zum Ausbilden einer Parabelfeder ausgewalzt. Eine solche Feder ist auch aus EP 2 283 946 A2 bekannt.

Auch wenn mit einer als Parabelfeder ausgelegten Blattfeder gegenüber Blattfederpaketen bereits eine signifikante Gewichtsreduzierung erzielt werden konnte, wäre es zur Reduzierung des Leergewichtes eines Fahrzeuges, welches in seiner Achsaufhängung Blattfedern benötigt, wünschenswert, wenn das Gewicht einer solchen Blattfeder weiter reduziert werden könnte. Bei der Auslegung von Parabelfedern ist überdies darauf zu achten, dass keine Ermüdungsbrüche eintreten. Aus diesem Grunde muss der Einspannabschnitt eine gewisse Dicke aufweisen, um Brüche im Federarm und auch im Übergang von dem Einspannabschnitt in das Federarm zu vermeiden.

Ausgehend von diesem diskutierten Stand der Technik liegt der Erfindung daher die Aufgabe zugrunde, ein Verfahren zum Herstellen einer Blattfeder für eine Fahrzeugachsaufhängung vorzuschlagen, mit dem die damit hergestellte Blattfeder, insbesondere wenn als Parabelfeder ausgeführt, ein bei gleicher Federleistung geringeres Gewicht aufweisen kann. Der Erfindung liegt auch die Aufgabe zugrunde, eine solche Blattfeder vorzuschlagen.

Gelöst wird diese Aufgabe erfindungsgemäß durch ein Verfahren der eingangs genannten, gattungsgemäßen Art, bei dem durch den Walzprozess zum Formen der Blattfeder ein Vormaterialstab mit rundlicher Querschnittsgeometrie in eine rechteckförmige Querschnittsgeometrie in dem Einspannabschnitt und in dem zumindest einen Federarm ausgewalzt wird und somit durch den Walzprozess auch der zum Ausbilden des Einspannabschnittes bei der fertigen Blattfeder vorgesehene Abschnitt des Vormaterialstabes umgeformt und dadurch auch in diesem ein Walzgefüge ausgebildet wird.

Die blattfederbezogene Aufgabe wird erfindungsgemäß durch eine Blattfeder der eingangs genannten, gattungsgemäßen Art gelöst, bei der der Einspannabschnitt ein solches, durch den Walzprozess eingebrachtes Walzgefüge aufweist, dass die Umformrate und die damit einhergehende Kornlängung zu den Schmalseiten hin abnimmt.

Bei dem erfindungsgemäßen Verfahren wird in Abkehr von der herrschenden Lehre, den Einspannabschnitt als Vormaterialstababschnitt nicht umzuformen, abgerückt. Im Gegensatz hierzu wird bei diesem Verfahren auch der spätere Einspannabschnitt aus dem Vormaterialstab durch einen Walzprozess umgeformt, um in diesem auch ein Walzgefüge auszubilden. Vorgesehen ist, dass die Umformrate zum Formen des Einspannabschnittes aus dem hierfür vorgesehenen Abschnitt des Vormaterialstabes 15 % oder mehr beträgt. Die Umformrate kann ohne Weiteres auch 25 bis 30 % oder mehr betragen. Es versteht sich, dass je größer die Umformrate beim Walzen des zum Ausbilden des Einspannabschnittes vorgesehenen Abschnittes des Vormaterialstabes ist, desto intensiver wird das Walzgefüge ausgebildet. Ein solches Walzgefüge zeichnet sich durch eine Kornlängung beziehungsweise ein gestrecktes Gefüge aus. Gewalzt wird, wenn sich der Vormaterialstab oberhalb seiner Härtetemperatur, typischerweise seiner Austentisierungstemperatur befindet. Durch die Ausbildung eines Walzgefüges auch im Einspannabschnitt geht dieses Gefüge kontinuierlich in das oder die Federarme über, in denen aufgrund der entsprechend höheren Umformrate das Walzgefüge stärker ausgeprägt ist als im Einspannabschnitt. Da sich das Walzgefüge aus den bei einer Benutzung der Parabelfeder dynamisch bewegten Federarmen in den Einspannabschnitt fortsetzt, ist die Kerbempfindlichkeit der Blattfeder im Übergang zwischen dem zumindest einen Federarm und dem angrenzenden Einspannabschnitt vermindert. Infolgedessen kann bei Verwirklichung dieses Konzeptes, ohne Brüche in Kauf nehmen zu müssen, die Dicke in dem Einspannabschnitt bei gleicher Leistungsfähigkeit der Blattfeder gegenüber herkömmlichen reduziert werden, worin eine Gewichtsreduzierung begründet ist. Die vorbeschriebenen Vorteile ergeben sich beim Auswalzen des Einspannabschnittes bereits dann, wenn das Walzen ohne auf den Vormaterialstab wirkende Zugspannung vorgenommen wird. Eine Verbesserung in der Ausbildung des der Längserstreckung der Parabelfeder folgenden Walzgefüges kann erreicht werden, wenn das Auswalzen des Einspannabschnittes unter auf den Vormaterialstab einwirkender Zuglast und einer damit einhergehenden definierten Längung vorgenommen wird.

Ausgangsmaterial für eine solche Blattfeder kann ein Vormaterialstab mit einer rechteckförmigen oder einer quadratischen Querschnittsgeometrie ebenso aufweisen, wie mit einer rundlichen.

Zum Einfrieren des Walzgefüges der ausgewalzten Blattfeder und zum Verhindern einer vollständigen Rekristallisation wird diese im Anschluss an den Walzprozess, der ein oder auch mehrstichig durchgeführt werden kann, gegebenenfalls auch mit den Schritten einer Zwischenerwärmung entsprechend abgekühlt (vergütet). Dieses kann durch Abschrecken, beispielsweise in einem Ölbad, vorgenommen werden. Derartige Verfahren sind hinlänglich bekannt. Zu diesen zählt auch das so genannte Ausforming. Bei dem Vorgang des Vergütens kann die geformte Blattfeder in Sprengung gehalten sein.

Aufgrund des vorbeschriebenen Konzeptes des Ausbildens des Einspannabschnittes ebenfalls durch Auswalzen eines Abschnittes des Vormaterialstabes erlaubt dieses den Einsatz eines Vormaterialstabes, der nicht notwendigerweise eine flache Oberseite und eine parallel dazu verlaufende flache Unterseite aufweist. Somit können zum Herstellen einer Blattfeder - bei dieser muss es sich nicht notwendigerweise um eine Parabelfeder handeln - auch Vormaterialstäbe mit einer von der herkömmlich üblichen rechteckförmigen Querschnittsgeometrie abweichenden Querschnittsgeometrie eingesetzt werden, also beispielsweise rundliche oder sogar Vormaterialstäbe, die eine kreisrunde Querschnittsgeometrie aufweisen. Bei einem Einsatz eines Vormaterialstabes mit einem solchen Querschnitt entspricht die Umformrate zum Ausbilden des Einspannabschnittes typischerweise etwa 25 - 30 % oder ist sogar etwas größer als diese. Die Umformrate in dem Abschnitt des Vormaterialstabes, der den Einspannabschnitt ausbilden soll, ist auch abhängig davon, wie breit die einander gegenüberliegenden Anlageflächen ausgebildet sein sollen. Bei Einsatz eines Vormaterialstabes mit einer rundlichen, insbesondere kreisrunden Querschnittsgeometrie ist die Umformrate und damit die Ausbildung eines Walzgefüges im Bereich der in Längserstreckung der Blattfeder verlaufenden Mitte am größten. Die Umformrate nimmt zu den Schmalseiten hin etwas ab, ebenso wie die damit einhergehende Kornlängung. Dennoch wird durch die Kornlängung auch in Querrichtung zur Längserstreckung der Blattfeder die Querbelastbarkeit erhöht, da die Kerbempfindlichkeit aufgrund der geringeren Kornlängung an den Schmalseiten gegenüber einer größeren Kornlängung reduziert ist. Ausgehend von einem Vormaterialstab mit zylindrischer Mantelfläche wird eine Umformrate im Bereich des Einspannabschnittes von etwa 30% als ausreichend angesehen, um hinreichend breite Anlageflächen zu erhalten. Bei Auswalzen einer Parabelfeder aus einem solchen Vormaterialstab wird der Walzprozess typischerweise so durchgeführt, dass die größere Umformrate in dem oder den Federarmen zu einer größeren Breite der Federarme gegenüber dem Einspannabschnitt führt. Mithin ist der Einspannabschnitt schmaler als der oder die daran angeformten Federarme. Gegenüber vorbekannten Parabelfedern ist auch hierdurch eine Gewichtsreduktion gegeben. Herkömmliche Parabelfedern haben einen Einspannabschnitt, der gegenüber der Breite der Parabelfeder in dem oder den Federarmen nicht reduziert ist. Anstelle des vorbeschriebenen Schälens ist grundsätzlich auch eine andere mechanische Bearbeitung ohne geometrisch bestimmte Schneide möglich.

Bei Einsatz von Vormaterialstäben mit rundlicher, insbesondere kreisrunder Querschnittsgeometrie kann ein Vormaterialstab als Ausgangsprodukt zum Herstellen einer Blattfeder mit einer mit wirtschaftlich vertretbarem Aufwand mechanisch bearbeiteten Oberfläche eingesetzt werden. Die mechanische Bearbeitung der Oberfläche des Vormaterialstabes dient zum Entfernen einer Randentkohlungsschicht, von Oberflächenunvollständigkeiten, Zunder und dergleichen, also von Oberflächenfehlern, die nicht in die Oberflächen der Blattfeder eingewalzt werden oder anderweitig deren Bestandteil bleiben sollen. Es ist bekannt, dass bei der Herstellung von Schraubenfedern sowie anderen rotationssymmetrischen Federelementen (Drehstäben, Stabilisatoren) die Leistungsfähigkeit der damit hergestellten Feder und damit auch deren Gewicht signifikant reduziert werden kann, wenn die Randentkohlungsschicht und andere Oberflächenunzulänglichkeiten vor dem Formen der Feder entfernt worden sind. Bei Schraubendruckfedern, die aus rundem Vormaterial hergestellt werden, wird dieses seit Längerem vorgenommen. Bei Blattfedern war entsprechendes bislang jedoch nicht in wirtschaftlich vertretbarer Art und Weise möglich. Beschrieben ist in DE 1 281 468 A, dass zum Herstellen von Blattfedern rechteckförmige Vormaterialstäbe an ihrer Zugseite vor dem Erhitzen und Walzen des Rohlings geschliffen werden. Nachteilig ist, dass die vorgeschlagene Oberflächenbehandlung nur an der Zugseite vorgenommen wird. Dieses Verfahren ist zudem unwirtschaftlich und kann aufgrund von Schleifmartensit zu einer Rissbildung führen. Bei einem Einsatz eines Vormaterialstabes mit rundlicher, insbesondere kreisrunder Querschnittsgeometrie, wie dieses erfindungsgemäß zum Herstellen von Blattfedern vorgeschlagen wird, kann eine Oberflächenentfernung umfänglich in wirtschaftlicher Art und Weise vorgenommen werden. Hierfür bietet sich beispielsweise das mechanische Bearbeiten des Vormaterialstabes mit definierter Schneide oder mit definierten Schneiden an, was auch als Schälen angesprochen wird. Mit einer solchen mechanischen Bearbeitung kann eine Randschicht in der Stärke von etwa 0,5 bis etwa 1,0 mm entfernt werden. Durch das Entfernen der Oberflächenschicht vor dem Erhitzen und Auswalzen der Feder ist die Leistungsfähigkeit der hergestellten Feder signifikant erhöht. Mit anderen Worten: Die gleiche Leistungsfähigkeit einer Blattfeder kann mit einer mit einem signifikant geringeren Gewicht hergestellten erreicht werden. Auch hierhin liegt eine Gewichtsersparnis begründet.

Auch wenn bei dieser Ausgestaltung der Erfindung ein Walzgefüge im Einspannabschnitt vorhanden sein kann, bietet diese Ausgestaltung auch, ohne ein Walzgefüge im Einspannabschnitt bei der fertigen Blattfeder zu haben, signifikante Vorteile gegenüber herkömmlichen Blattfedern. Das Vergüten der Feder kann auch in einem nachfolgenden Schritt mit erneuter Erwärmung vorgenommen werden, typischerweise wenn die Blattfeder vorgesprengt ist.

Nachfolgend ist die Erfindung anhand eines Ausführungsbeispiels unter Bezugnahme auf die beigefügten Figuren beschrieben. Es zeigen:
- **Fig. 1:**: eine schematisierte Darstellung einer Parabelfeder mit einem Einspannabschnitt und einem daran angeformten Federarm,
- **Fig. 2:**: eine Parabelfeder gemäß einem weiteren Ausführungsbeispiel mit zwei an ihrem Einspannabschnitt angeformten Federarmen,
- **Fig. 3a, 3b:**: eine schematisierte Darstellung der Querschnittsveränderung beim Herstellen der Parabelfeder der Figur 1 ausgehend von einem warmgewalztem Vormaterialstab in unterschiedlichen Abschnitten der Parabelfeder (Figur 3a) und in einer Draufsicht zum Darstellen der Breitenänderung (Figur 3b),
- **Fig. 4:**: eine schematisierte Gefügebilddarstellung eines Vormaterialstabes in einem normalisierten Zustand und
- **Fig. 5:**: eine schematisierte Gefügedarstellung aus dem Einspannabschnitt der Parabelfeder der Figur 1 mit Schnittebene in Längserstreckung der Parabelfeder.

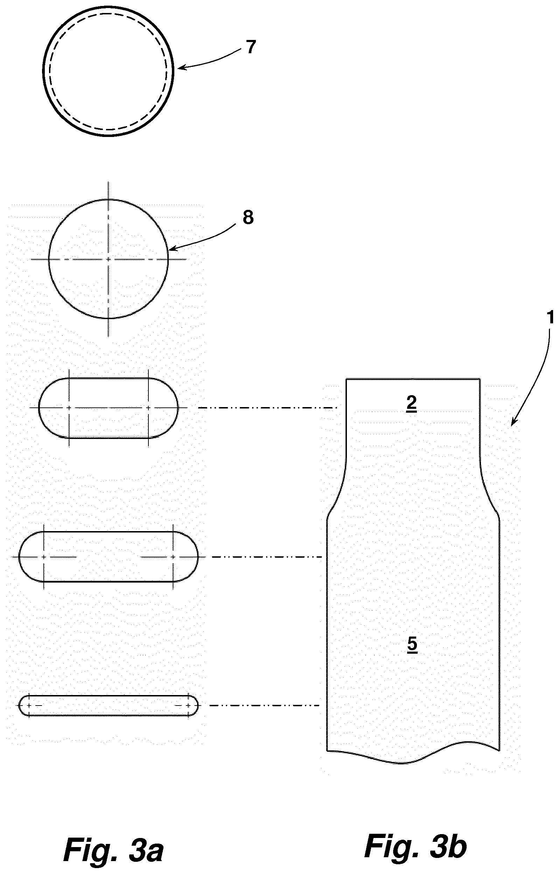

Eine Parabelfeder 1 umfasst einen Einspannabschnitt 2 mit einer oberen Anlagefläche 3 und einer unteren Anlagefläche 4. Der Einspannabschnitt 2 dient zum Anschließen der Parabelfeder 1 an die Achse eines Fahrzeuges. Der Anschluss an die Achse erfolgt, wie dies von herkömmlichen Parabelfedern bekannt ist, und braucht daher nicht näher an dieser Stelle beschrieben zu werden. An dem Einspannabschnitt 2 ist ein Federarm 5 angeformt, dessen Ende zur Ausbildung eines Befestigungsmittels zum Anschließen der Parabelfeder 1 an das Chassis eines Fahrzeuges zu einem Auge 6 geformt ist. Die Parabelfeder 1 ist, wie dieses nachfolgend zu den Figuren 3a, 3b erläutert werden wird, im Wege eines Walzprozesses geformt worden. Das Federarm 5 ist parabelförmig ausgewalzt und weist somit ausgehend von seinem Einspannabschnitt 2 in Richtung zu dem Auge 6 sukzessive eine abnehmende Querschnittsfläche auf.

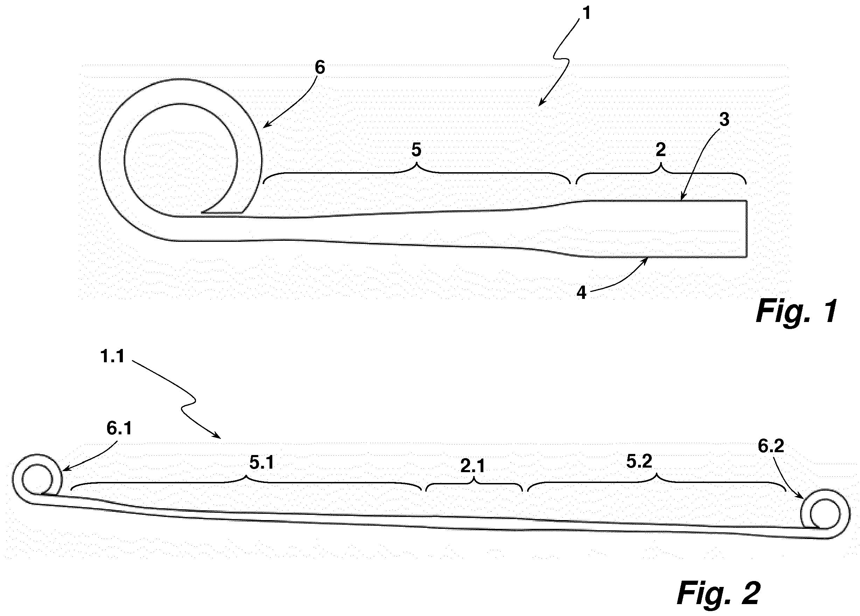

Figur 2 zeigt eine weitere Parabelfeder 1.1, an deren Einspannabschnitt 2.1 zwei Federarme 5.1, 5.2 angeformt sind. Beide Federarme 5.1, 5.2 tragen endseitig ein Auge 6.1, 6.2. Bei der Parabelfeder 1.1 befindet sich der Einspannabschnitt 2.1 außermittig. Dieses ist der speziellen Auslegung der Parabelfeder 1.1 geschuldet.

Nachfolgend ist das Herstellungsverfahren zum Herstellen der Blattfeder 1 näher beschrieben. Die Blattfeder 1.1 ist in gleicher Weise hergestellt worden.

Ausgangsprodukt zum Herstellen der Parabelfeder 1 ist ein Vormaterialstab 7 mit runder Querschnittsgeometrie. Bei dem Vormaterialstab handelt es sich um einen warmgewalzten Stab, wie diese als solche bekannt sind, aus einem Federstahl.

In einem ersten Schritt wird durch eine mechanische Bearbeitung die Randschicht von dem Vormaterialstab 7 entfernt, und zwar bei dem beschriebenen Ausführungsbeispiel durch einen an sich bekannten Schälprozess. Bei dem dargestellten Ausführungsbeispiel wird eine Randschicht von etwa 0,8 mm von dem Vormaterialstab 7 entfernt. Gestrichelt ist in Figur 3a an dem Vormaterialstab 7 die Dicke der zu entfernenden Randschicht eingetragen. Der von seiner Randschicht befreite Vormaterialstab 7 ist in Figur 3a mit dem Bezugszeichen 8 kenntlich gemacht. Durch Entfernen der Randschicht werden Oberflächenfehler entfernt, beispielsweise eine Randentkohlungsschicht, Zunder, Oberflächenungenauigkeiten und dergleichen. Die zylindrische Mantelfläche des Vormaterialstabes 8 weist dann für den nachfolgenden Walzprozess eine signifikant verbesserte Oberfläche auf. Jedenfalls werden zuvor vorhandene Oberflächenunzulänglichkeiten nicht in die Blattfeder eingewalzt oder bleiben deren Bestandteil.

In einem nachfolgenden Schritt wird der Vormaterialstab 8 auf seine Härtetemperatur erwärmt. Bei dem dargestellten Ausführungsbeispiel wird der Vormaterialstab 8 auf seine Austentisierungstemperatur erwärmt. Anschließend wird der auf seine Härtetemperatur befindliche Vormaterialstab 8 ein- oder mehrstichig gewalzt, und zwar zur Ausbildung seines Einspannabschnittes 2 und zur Ausbildung seines Federarmes 5. In Figur 3a sind die Querschnittsgeometrien der Parabelfeder 1 aus dem Bereich des Einspannabschnittes 2, dem Federarm 5 und dem Auswalzungsende, ebenfalls Teil des Federarmes 5, dargestellt. Die Lage der Querschnitte in Bezug auf die Parabelfeder 1 sind unter Bezugnahme auf Figur 3b kenntlich gemacht. Die Parabelfeder 1 in der Darstellung der Figur 3 ist hinsichtlich ihrer Länge verkürzt dargestellt. Das Auswalzungsende ist mit gleich bleibender Dicke gewalzt. Hieraus wird in einem nachfolgenden Schritt das Auge 6 geformt. Um ein zu weites Abkühlen des Walzlings zu vermeiden, kann dieser ein oder mehrfach zwischenerwärmt werden, und zwar in denjenigen Abschnitten, in denen dieser noch nicht ausgewalzt ist.

Der Walzprozess wird somit in der gleichen Wärme durchgeführt und anschließend nach Formen der Parabelfeder 1 vergütet. Damit wird das sich beim Walzen ausgebildete Walzgefüge eingefroren und ein Rekristallisieren verhindert. Das Auswalzen des Federarmes erfolgt unter Anlegen einer Zugbelastung, sodass das Auswalzen mit einer Längung des Vormaterialstabes 8 einhergeht. Wenn bestimmte Schmalseiten- oder Kantenausbildungen gewünscht sind, kann es sich anbieten, dieses über Vertikalwalzen der Schmalseiten einzustellen.

Die Draufsicht auf die Parabelfeder 1 in der Figur 3b verdeutlich die besondere Taillierung des Einspannabschnittes 2 gegenüber dem Federarm 5. Es ist bereits darauf hingewiesen worden, dass hierhin eine Gewichtsersparnis begründet liegt. Wegen der Taillierung im Bereich des Einspannabschnittes 2 gegenüber dem Federarm 5 wird auch nur eine schmalere Ausbildung von Briden- und Sattelplatten zum Anschließen der Parabelfeder 1 an eine Fahrzeugachse benötigt. Auch dieses führt zu einer Gewichtsreduktion. Zudem wird Bauraum gespart. Mithin können derartige Parabelfedern, wenn horizontal nebeneinander angeordnet, näher zueinander positioniert werden. Die Taillierung bietet hinreichend Raum, um darin eine Sattelplatte und Bridenschrauben anzuordnen.

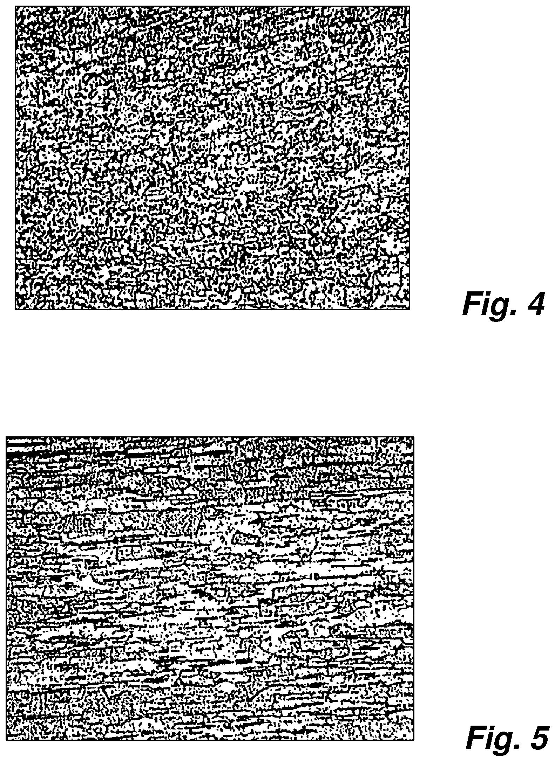

Die Figur 4 zeigt ein schematisiertes Gefügebild des Vormaterialstabes 8 mit Schnittebene in Längserstreckung des selben. Das Gefüge ist ohne erkennbare Ausrichtung. Die Körner weisen eine weitgehende symmetrische Kontur auf.

Figur 5 zeigt in einer Gegenüberstellung ein schematisiertes Gefügebild aus dem Einspannabschnitt 2 der Parabelfeder 1, ebenfalls mit Schnittebene in Längserstreckung der Parabelfeder 1. Aufgrund des Auswalzens des Einspannabschnittes 2, wie vorstehend beschrieben, hat sich das in Figur 5 gezeigte Walzgefüge ausgebildet. Das Gefüge ist gestreckt. was durch eine Kornlängung begründet ist. Dieses Gefüge ist für die vorgeschriebenen positiven mechanischen Eigenschaften des späteren Vergütungsgefüges verantwortlich.

In den Figuren ist eine Parabelfeder mit angeformten Augen beispielhaft dargestellt. Die Vorteile der Erfindung ergeben sich gleichermaßen auch bei Federblättern, die kein Befestigungsmittel, wie beispielsweise Augen, aufweisen. Somit kann bei einem Federpaket jede Lage mit dem Konzept dieser Erfindung hergestellt werden.

Die Erfindung ist anhand von Ausführungsbeispielen beschrieben worden. Ohne den Umfang der geltenden Ansprüche zu verlassen, ergeben sich für einen Fachmann zahlreiche weitere Ausgestaltungen, die Erfindung umsetzen zu können, ohne dass dieses im Rahmen dieser Ausführungen näher beschrieben werden müssten.

### Bezugszeichenliste

- 1, 1.1: Parabelfeder
- 2, 2.1: Einspannabschnitt
- 3: Obere Anlagefläche
- 4: Untere Anlagefläche
- 5, 5.1, 5.2: Federarm
- 6, 6.1, 6.2: Auge
- 7: Vormaterialstab
- 8: geschälter Vormaterialstab

## Patentansprüche

1. Verfahren zum Herstellen einer Blattfeder (1, 1.1) einer Fahrzeugachsaufhängung, bei dem aus einem stabförmigen Vormaterial (7, 8) der zumindest eine an einen Einspannabschnitt (2, 2.1) grenzende Federarm (5, 5.1, 5.2) durch einen Walzprozess geformt wird, wobei vor dem Prozess des Auswalzens des Vormaterialstabes (7) zum Formen der Blattfeder (1, 1.1) von dem Vormaterialstab (7) mechanisch eine Randschicht entfernt wird und wobei das Auswalzen des zumindest einen Federarmes (5, 5.1, 5.2) in Richtung von dem Einspannabschnitt (2, 2.1) zu seinem anderen Ende hin derart durchgeführt wird, damit die Querschnittsfläche in wenigstens einem Abschnitt des Federarmes (5, 5.1, 5.2) reduziert wird, **dadurch gekennzeichnet, dass** durch den Walzprozess zum Formen der Blattfeder ein Vormaterialstab (7, 8) mit rundlicher Querschnittsgeometrie in eine rechteckförmige Querschnittsgeometrie in dem Einspannabschnitt (2) und in dem zumindest einen Federarm (5, 5.1, 5.2) ausgewalzt wird und somit durch den Walzprozess auch der zum Ausbilden des Einspannabschnittes (2, 2.1) bei der fertigen Blattfeder (1, 1.1) vorgesehene Abschnitt des Vormaterialstabes (7, 8) umgeformt und dadurch auch in diesem ein Walzgefüge ausgebildet wird.

2. Verfahren nach Anspruch 1, **dadurch gekennzeichnet, dass** das Auswalzen des Einspannabschnittes (2, 2.1) der Blattfeder (1, 1.1) derart durchgeführt wird, dass die Umformrate 15 % oder mehr beträgt.

3. Verfahren nach Anspruch 1 oder 2, **dadurch gekennzeichnet, dass** die Querschnittsgeometrie des Vormaterialstabes (7, 8) kreisrund ist.

4. Verfahren nach einem der Ansprüche 1 bis 3, **dadurch gekennzeichnet, dass** der Vormaterialstab (7, 8) zum Formen des Einspannabschnittes zu mehr als 25 bis 30 % umgeformt wird.

5. Verfahren nach Anspruch 1, **dadurch gekennzeichnet, dass** die kreisrunde Querschnittsgeometrie des Vormaterialstabes durch den Schritt des Entfernens der Randschicht erstellt wird.

6. Verfahren nach Anspruch 5, **dadurch gekennzeichnet, dass** die Randschicht durch eine mechanische Bearbeitung des Vormaterialstabes (7) mit definierter Schneide vorgenommen wird.

7. Verfahren nach einem der Ansprüche 1 bis 6, **dadurch gekennzeichnet, dass** der Walzprozess mehrstichig durchgeführt wird.

8. Verfahren nach einem der Ansprüche 1 bis 7, **dadurch gekennzeichnet, dass** eine Blattfeder (2.1) mit zwei Federarmen (5.1, 5.2) hergestellt wird.

9. Verfahren nach einem der Ansprüche 1 bis 8, **dadurch gekennzeichnet, dass** der Vormaterialstab (7) aus einem Federstahl gewalzt worden ist und nach Entfernen einer Randschicht und vor dem Walzprozess auf Härtetemperatur erwärmt, der Walzprozess auf diesem Temperaturniveau durchgeführt und anschließend die geformte Blattfeder zum Einfrieren des Walzgefüges gekühlt wird.

10. Verfahren nach einem der Ansprüche 1 bis 9, **dadurch gekennzeichnet, dass** das Auswalzen des Einspannabschnittes unter auf den Vormaterialstab einwirkender Zuglast und einer damit einhergehenden Längung vorgenommen wird.

11. Blattfeder einer Fahrzeugachsaufhängung mit einem durch eine erste und eine zweite Anlagefläche (3, 4) gebildeten Einspannabschnitt (2, 2.1) und mit zumindest einem daran angeformten und durch einen Walzprozess geformten Federarm (5, 5.1, 5.2) wobei der zumindest eine Federarm (5, 5.1, 5.2) zum Ausbilden einer Parabelfeder (1, 1.1) ausgewalzt ist, **dadurch gekennzeichnet, dass** der Einspannabschnitt (2, 2.1) ein solches durch den Walzprozess eingebrachtes Walzgefüge aufweist, dass die Umformrate und die damit einhergehende Kornlängung zu den Schmalseiten hin abnimmt.

12. Blattfeder nach Anspruch 11, **dadurch gekennzeichnet, dass** der Einspannabschnitt (2, 2.1) eine geringere Breite aufweist als der zumindest eine daran angeformte Federarm (5, 5.1, 5.2).

13. Blattfeder nach einem der Ansprüche 1 bis 12, **dadurch gekennzeichnet, dass** an dem dem Einspannabschnitt (2, 2.1) gegenüberliegenden Ende des zumindest einen Federarmes (5, 5.1, 5.2) ein Befestigungselement (6, 6.1, 6.2) geformt ist.

14. Blattfeder nach einem der Ansprüche 1 bis 13, **dadurch gekennzeichnet, dass** die Blattfeder (1.1) zwei Federarme (5.1, 5.2) aufweist.

## Claims

1. Method for producing a leaf spring (1, 1.1) of a vehicle suspension system, with which, from bar-shaped source material (7, 8), the at least one spring arm (5, 5.1, 5.2) adjoining a tensioning section (2, 2.1) is formed by a rolling process, wherein, before the process of rolling out the source material bar (7) for the forming of the leaf spring (1, 1.1), an edge layer is removed from the source material bar (7) by mechanical means, and wherein the rolling out of the at least one spring arm (5, 5.1, 5.2) is carried out in the direction from the tensioning section (2, 2.1) towards its other end in such a way that the cross-section surface area is reduced in at least one section of the spring arm (5, 5.1, 5.2), **characterised in that,** by means of the rolling process for forming the leaf spring, a source material bar (7, 8) with round cross-section geometry is rolled into a rectangular cross-section geometry in the tensioning section (2) and in the at least one spring arm (5, 5.1, 5.2), and therefore, by means of the rolling process, the section of the source material bar (7, 8), provided for forming the tensioning section (2, 2.1) on the finished leaf spring (1, 1.1), is also shaped and thereby a rolling microstructure is also formed therein.

2. Method according to claim 1, **characterised in that** the rolling of the tensioning section (2, 2.1) of the leaf spring (1, 1.1) is carried out in such a way that the forming rate amounts to 15% or more.

3. Method according to claim 1 or 2, **characterised in that** the cross-section geometry of the source material bar (7, 8) is circular.

4. Method according to any one of claims 1 to 3, **characterised in that** the source material bar (7, 8) is shaped to more than 25 to 30% in order to form the tensioning section.

5. Method according to claim 1, **characterised in that** the circular cross-section geometry of the source material bar is produced by the step of removing the edge layer.

6. Method according to claim 5, **characterised in that** the edge layer is carried out by a mechanical processing of the source material bar (7) by defined cutting.

7. Method according to any one of claims 1 to 6, **characterised in that** the rolling process is carried out in multiple passes.

8. Method according to any one of claims 1 to 7, **characterised in that** a leaf spring (1.1) is produced with two spring arms (5.1, 5.2).

9. Method according to any one of claims 1 to 8, **characterised in that** the source material bar (7) is rolled from a spring steel, and, after the removal of an edge layer and before the rolling process, is heated to hardening temperature, the rolling process is carried out at this temperature level, and the shaped leaf spring is then cooled in order to freeze the rolling microstructure.

10. Method according to any one of claims 1 to 9, **characterised in that** the rolling of the tensioning section is carried out under a tension load being imposed on the source material bar, and with a lengthening effect inherent with this.

11. Leaf spring of a vehicle suspension system, with a tensioning section (2, 2.1) formed by a first and a second contact surface (3, 4) and with at least one spring arm (5, 5.1, 5.2) formed onto this and shaped by a rolling process, wherein the at least one spring arm (5, 5.1, 5.2) is rolled out so as to form a parabolic spring (1, 1.1), **characterised in that** the tensioning section (2, 2.1) exhibits a rolling microstructure produced by the rolling process which is of such a type that the forming rate, and the grain lengthening inherent with this, decreases towards the narrow sides.

12. Leaf spring according to claim 11, **characterised in that** the tensioning section (2,2.1) exhibits a smaller width than the at least one spring arm (5, 5.1, 5.2) formed onto it.

13. Leaf spring according to any one of claims 1 to 12, **characterised in that** at the end of the at least one spring arm (5, 5.1, 5.2) which is opposite the tensioning section (2, 2.1) is formed as a securing element (6, 6.1, 6.2).

14. Leaf spring according to any one of claims 1 to 13, **characterised in that** the leaf spring (1.1) comprises two spring arms (5.1, 5.2).

## Revendications

1. Procédé de fabrication d'un ressort à lames (1, 1.1) d'une suspension d'essieu de véhicule, lors duquel l'au moins un bras ressort (5, 5.1, 5.2) contigu à un tronçon de serrage (2, 2.1) est mis en forme à partir d'un matériau primaire (7, 8) en forme de tige au cours d'un processus de laminage, une couche superficielle étant enlevée mécaniquement de la tige de matière primaire (7) avant le processus de laminage de la tige de matière primaire (7) destiné à mettre en forme le ressort à lames (1, 1.1) et le laminage de l'au moins un bras ressort (5, 5.1, 5.2) étant réalisé à partir de l'extrémité de serrage (2, 2.1) en direction de son autre extrémité, de manière à réduire la coupe transversale dans au moins un tronçon du bras ressort (5, 5.1, 5.2), **caractérisé en ce que,** au cours du processus de laminage pour mettre en forme le ressort à lames, une tige de matériau primaire (7, 8) présentant une géométrie de section transversale ronde est laminée en une géométrie de section transversale carrée dans le tronçon de serrage (2) et dans l'au moins un bras ressort (5, 5.1, 5.2) et qu'ainsi, au cours du processus de la laminage, le tronçon de tige de matériau primaire (7, 8) prévu pour réaliser le tronçon de serrage (2, 2.1) sur le ressort à lames (1, 1.1) fini est également mis en forme et que, de ce fait, on réalise également dans celui-ci une structure de laminage.

2. Procédé selon la revendication 1, **caractérisé en ce que** le laminage du tronçon de serrage (2, 2.1) du ressort à lames (1, 1.1) est réalisé de telle sorte que le taux de déformation est de 15 % ou plus.

3. Procédé selon la revendication 1 ou 2, **caractérisé en ce que** la géométrie de section transversale de la tige de matériau primaire (7, 8) est ronde.

4. Procédé selon l'une des revendications 1 à 3, **caractérisé en ce** la tige de matériau primaire (7, 8) est déformée pour mettre en forme le tronçon de serrage à plus de 25 à 30 %.

5. Procédé selon la revendication 1, **caractérisé en ce que** la géométrie de section transversale ronde de la tige de matériau primaire est réalisée par l'étape d'enlèvement de la couche superficielle.

6. Procédé selon la revendication 5, **caractérisé en ce que** la couche superficielle est prélevée par un usinage mécanique du matériau primaire (7) à l'aide d'un taillant défini.

7. Procédé selon l'une des revendications 1 à 6, **caractérisé en ce que** le processus de laminage est réalisé en plusieurs passages.

8. Procédé selon l'une des revendications 1 à 7, **caractérisé en ce que** un ressort à lames (2.1) est fabriqué avec deux bras ressorts (5.1, 5.2).

9. Procédé selon l'une des revendications 1 à 8, **caractérisé en ce que** la tige de matériau primaire (7) a été laminée à partir d'un acier ressort qui a été chauffé à une température de trempe après l'enlèvement de la couche superficielle et avant le processus de laminage, le processus de laminage étant réalisé à ce niveau de température et qu'ensuite le ressort à lames mis en forme est refroidi afin de geler la structure de laminage.

10. Procédé selon l'une des revendications 1 à 9, **caractérisé en ce que** le laminage du tronçon de serrage est réalisé avec une charge de traction s'exerçant sur la tige de matériau primaire et avec l'allongement qui en découle.

11. Ressort à lames d'une suspension d'essieu de véhicule comportant un tronçon de serrage (2, 2.1) réalisé par une première et une seconde surface d'appui (3, 4) et avec au moins un bras ressort (5, 5.1, 5.2) moulé sur celui-ci et mis en forme par un processus de laminage, l'au moins un bras ressort (5, 5.1, 5.2) étant laminé afin de former un ressort parabolique (1, 1.1), **caractérisé en ce que** le tronçon de serrage (2, 2.1) présente une telle structure de laminage introduite par le processus de laminage, que le taux de déformation et, par conséquent, l'allongement des grains qui en découle, diminue vers les côtés étroits.

12. Ressort à lames selon la revendication 11, **caractérisé en ce que** le tronçon de serrage (2, 2.1) présente une largeur inférieure à celle de l'au moins un bras ressort (5, 5.1, 5.2) qui est moulé dessus.

13. Ressort à lames selon l'une des revendications 1 à 12, **caractérisé en ce qu'**à l'extrémité de l'au moins un bras ressort (5, 5.1, 5.2), opposée au tronçon de serrage (2, 2.1), un élément de fixation (6, 6.1, 6.2) est mis en forme.

14. Ressort à lames selon l'une des revendications 1 à 13, **caractérisé en ce que** le ressort à lames (1.1) présente deux bras ressorts (5.1, 5.2).
